(19)

Europäisches Patentamt

European Patent Office

Office européen des brevets

(11) **EP 2 199 983 A1**

(12) **EUROPEAN PATENT APPLICATION**

(43) Date of publication:
**23.06.2010 Bulletin 2010/25**

(51) Int Cl.:
*G06T 7/20* (2006.01)

(21) Application number: **08172567.3**

(22) Date of filing: **22.12.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **Nederlandse Centrale Organisatie Voor Toegepast Natuurwetenschappelijk Onderzoek TNO 2628 VK Delft (NL)**

(72) Inventors:
• **Dubbelman, Gijs 2611 - ML, Delft (NL)**
• **van der Mark, Wannes 2315-EB, Leiden (NL)**

(74) Representative: **Hatzmann, Martin Vereenigde Johan de Wittlaan 7 2517 JR Den Haag (NL)**

(54) **A method of estimating a motion of a multiple camera system, a multiple camera system and a computer program product**

(57) The invention relates to a method of correcting a bias in a motion estimation of a multiple camera system in a three-dimensional (3D) space, wherein the fields of view of multiple cameras at least partially coincide. The method comprises the step of computing a first and second set of distribution parameters associated with corresponding determined 3D positions of image features in subsequent image sets. Further, the method comprises the step of estimating a set of motion parameters representing a motion of the multiple camera system. The method also comprises the steps of improving the computed first or second set of distribution parameters and improving the estimated set of motion parameters. Further, the method comprises calculating a bias direction based on the initially estimated set of motion parameters and on the improved estimated set of motion parameters.

**Description**

The present invention relates to a method of correcting a bias in a motion estimation of a multiple camera system in a three-dimensional (3D) space, wherein the fields of view of multiple cameras at least partially coincide, the method comprising the steps of providing a subsequent series of image sets that have substantially simultaneously been captured by the multiple camera system, identifying a multiple number of corresponding image features in a particular image set, determining 3D positions associated with said image features based on a disparity in the images in the particular set, determining 3D positions associated with said image features in a subsequent image set, computing a first and second set of distribution parameters associated with corresponding determined 3D positions and estimating a set of motion parameters representing a motion of the multiple camera system between the time instant associated with the particular image set and the time instant of the subsequent image set, based on 3D position differences of image features in images of the particular set and the subsequent set.

The method can e.g. be applied for accurately ego-motion estimation of a moving stereo-camera. If the camera is mounted on a vehicle this is also known as stereo-based visual-odometry. Stereo-processing allows estimation of the three dimensional (3D) location and associated uncertainty of landmarks observed by a stereo-camera. Subsequently, 3D point clouds can be obtained for each stereo-frame. By establishing correspondences between visual landmarks, the point clouds of two successive stereo-frames, i.e. from $t$ - 1 to $t$, can be related to each other. From these two corresponding point clouds the pose at $t$ relative to the pose at $t$ - 1 can be estimated. The position and orientation of the stereo-rig in the global coordinate frame can be tracked by integrating all the relative-pose estimates.

In the past decades several methods have been proposed to estimate the motion between 3D point patterns. The uncertainty of stereo-reconstruction is inhomogeneous, meaning that the uncertainty is not the same for each point, and anisotropic, meaning that it might be different in each dimension. For this type of noise a Heteroscedastic Error-In-Variables (HEIV) estimator has been developed in the prior art. Apart from being unbiased up to first order for heteroscedastic noise, the HEIV estimator is amongst the most accurate and efficient numerical optimization methods for computer vision applications. The approaches mentioned so far directly minimize a 3D error. An alternative approach is minimizing an error in image space.

In general, vision based approaches for ego-motion estimation are susceptible to outlier landmarks. Sources of outlier landmarks range from sensor noise, correspondences errors, to independent moving objects such as cars or people that are visible in the camera views. Robust estimation techniques such as RANSAC are therefore frequently applied. Recently, a method using Expectation Maximization on a local linearization, obtained by using Riemannian geometry, of the motion space SE(3) has been proposed. In the case of visual-odometry this approach has advantages in terms of accuracy and efficiency.

The integration of relative-pose estimates to track the global-pose is sensitive to error-propagation, i.e. small frame-to-frame motion errors eventually cause large errors in the estimated trajectory. In the literature several vision and non-vision based approaches can be found to minimize this drift. For example techniques such as (semi-)global optimization like (sliding window) bundle adjustment, loop-closing or using auxiliary sensors such as an IMU. One of the most popular approaches of the past decade is Simultaneous Localization and Mapping (SLAM) and many stereo-vision SLAM methods exists. The benefit of SLAM is that it combines all previous mentioned methods i.e. multi-frame landmark tracking,loop-closing and using auxiliary sensors in one sound mathematical framework. A disadvantage of SLAM is that many approaches explicitly rely on loop-closing to reach satisfactory accuracy.

It is an object of the invention to provide an improved method of estimating a multiple camera system in a 3D space according to the preamble wherein the bias is reduced without relying on auxiliary sensors. Thereto, according to the invention, the method further comprises the steps of improving the computed first or second set of distribution parameters using the computed second or first set of distribution parameters, respectively, and using the estimated set of motion parameters, improving the estimated set of motion parameters using the improved computation of the set of distribution parameters, and calculating a bias direction based on the initially estimated set of motion parameters and on the improved estimated set of motion parameters.

By improving the estimation of the distribution parameters set and the estimated set of motion parameters, a bias direction can be calculated for improving the set of motion parameters, thereby reducing the bias. As a result, the bias can be reduced providing accurate visual-odometry results for loop-less trajectories without relying on auxiliary sensors, (semi-)global optimization or loop-closing. In particular, thus, a drift in stereo-vision based relative-pose estimates is related to structural errors i.e. bias in the optimization process.

The invention also relates to a multiple camera system.

Further, the invention relates to a computer program product. A computer program product may comprise a set of computer executable instructions stored on a data carrier, such as a CD or a DVD. The set of computer executable instructions, which allow a programmable computer to carry out the method as defined above, may also be available for downloading from a remote server, for example via the Internet.

Other advantageous embodiments according to the invention are described in the following claims.

By way of example only, embodiments of the present invention will now be described with reference to the accompanying figures in which

Fig. 1 shows a schematic perspective view of an embodiment of a multiple camera system according to the invention;
Fig. 2a shows a coordinate system and a camera image quadrant specification;
Fig. 2b shows an exemplary camera image;
Fig. 3a shows a perspective side view of an imaged inlier;
Fig. 3b shows a perspective top view of the imaged inlier of Fig. 3a;
Fig. 4 shows a diagram of uncertainty in the determination of the inlier position;
Fig. 5a shows a bias in translation motion parameters wherein no approximation is made;
Fig. 5b shows a bias in rotation motion parameters wherein no approximation is made;
Fig. 5c shows a bias in translation motion parameters wherein an approximation is made;
Fig. 5d shows a bias in rotation motion parameters wherein an approximation is made;
Fig. 6a shows a bias in translation motion parameters in a second quadrant;
Fig. 6b shows a bias in rotation motion parameters in a second quadrant;
Fig. 6c shows a bias in translation motion parameters in a third quadrant;
Fig. 6d shows a bias in rotation motion parameters in a fourth quadrant;
Fig. 7a shows the bias of Fig. 6a when using the method according to the invention;
Fig. 7b shows the bias of Fig. 6b when using the method according to the invention;
Fig. 7c shows the bias of Fig. 6c when using the method according to the invention;
Fig. 7d shows the bias of Fig. 6d when using the method according to the invention;
Fig. 8 shows a first map with computed trajectory;
Fig. 9 shows a second map with a computed trajectory;
Fig. 10 shows an estimated height profile; and
Fig. 11 shows a flow chart of an embodiment of a method according to the invention.

It is noted that the figures show merely a preferred embodiment according to the invention. In the figures, the same reference numbers refer to equal or corresponding parts.

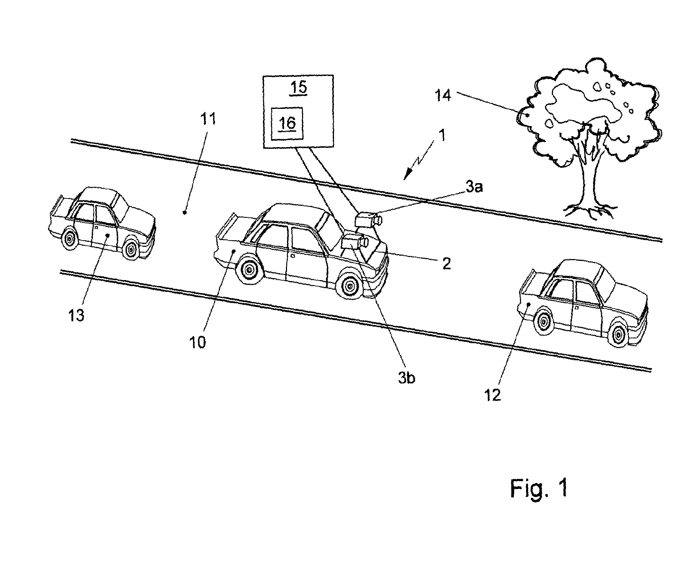

Figure 1 shows a schematic perspective view of a multiple camera system 1 according to the invention. The system 1 comprises a frame 2 carrying two cameras 3a, 3b that form a stereo-rig. The camera system 1 is mounted on a vehicle 10 that moves in a 3D space, more specifically on a road 11 between other vehicles 12, 13. A tree 14 is located near the road 11. The multiple camera system 1 is arranged for capturing pictures for further processing, e.g. for analyzing crime scenes, accident sites or for exploring areas for military or space applications. Thereto, the field of view of the cameras 3a, 3b at least partially coincides. Further, multiple camera system can be applied for assisting and/or autonomously driving vehicles. According to an aspect of the invention, the multiple camera system comprises a computer system 15 provided with a processor 16 that is arranged for processing the captured images such that an estimation of the camera system motion in the 3D space is obtained.

Optionally, the camera system 1 according to the invention is provided with an attitude and heading reference system (AHRS), odometry sensors and/or a geographic information system (GIS).

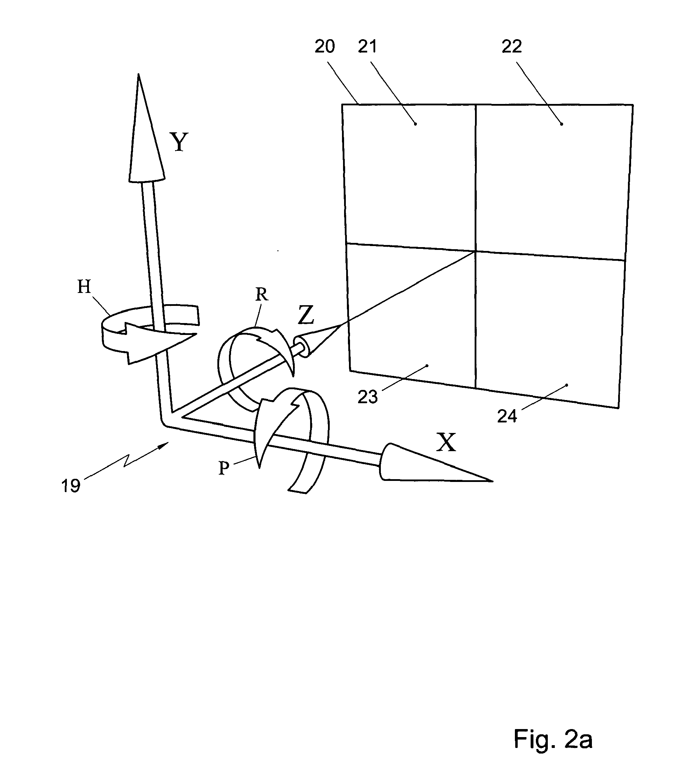

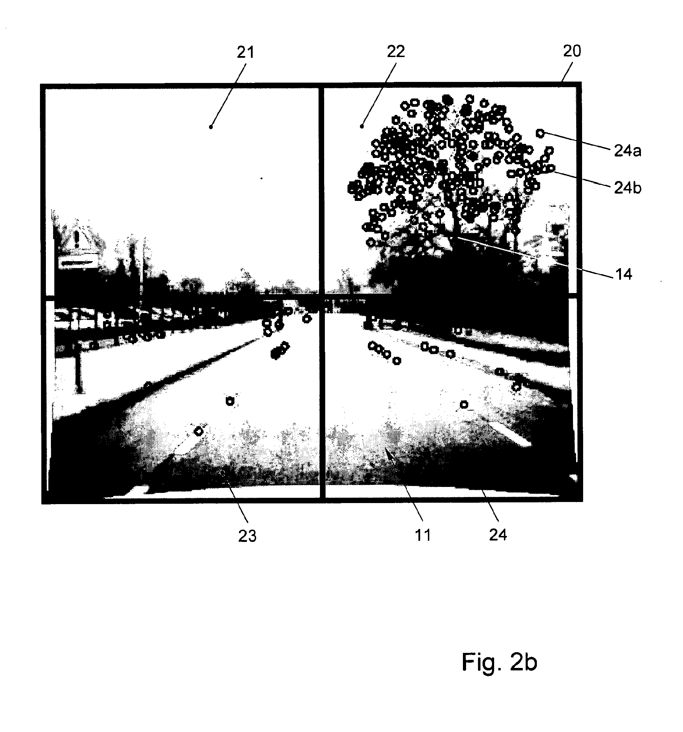

According to an aspect of the invention, a bias in a motion estimation of a multiple camera system in a three-dimensional (3D) space is corrected. Figure 2a shows a coordinate system and a camera image quadrant specification. The coordinate system 19 includes coordinate axes x, y and z. Further, rotations such as pitch P, heading H and roll R can be defined. A captured image 20 may include four quadrants 20, 21, 22, 23. Figure 2b shows an exemplary camera image 20 with inliers 24a, b, also called landmarks,

Static landmarks, such as the tree 14 observed by the stereo-cameras 3a, 3b which move according to a 3D motion, described using a rotation matrix $\overline{\mathbf{R}}$ and a translation vector $\overline{\mathbf{t}}$, may obey $\overline{\mathbf{v}}_i = \overline{\mathbf{R}}\overline{\mathbf{u}}_i + \overline{\mathbf{t}}$. Here $\overline{\mathbf{v}}_i$ and $\overline{\mathbf{u}}_i$ are noise free coordinates of a particular landmark observed at time instants $t$ and $t + 1$ relative to the coordinate frame of the moving camera system 1. Two corresponding landmark observations $\overline{\mathbf{v}}_i$ and $\overline{\mathbf{u}}_i$ can be combined into a matrix:

$$\overline{\mathbf{M}}_i = \begin{bmatrix} \overline{v}_x - \overline{u}_x & 0 & -\overline{v}_z - \overline{u}_z & \overline{v}_y - \overline{u}_y \\ \overline{v}_y - \overline{u}_y & \overline{v}_z + \overline{u}_z & 0 & -\overline{v}_x - \overline{u}_x \\ \overline{v}_z - \overline{u}_z & -\overline{v}_y - \overline{u}_y & \overline{v}_x + \overline{u}_x & 0 \end{bmatrix}. \qquad (1)$$

Then the motion constraint between $\overline{\mathbf{v}}_i$ and $\overline{\mathbf{u}}_i$ can also be expressed as

$$\overline{\mathbf{M}}_i\overline{\mathbf{q}} + \overline{\mathbf{Q}}\overline{\mathbf{t}} = 0 , \qquad\qquad (2)$$

where $\overline{\mathbf{q}} = [q, q_i, q_j, q_k]^T$ is the quaternion expressing the rotation $\overline{\mathbf{R}}$ and

$$\overline{\mathbf{Q}} = \begin{bmatrix} -q & -q_k & q_j \\ q_k & -q & -q_i \\ -q_j & q_i & -q \end{bmatrix} . \qquad\qquad (3)$$

Clearly, $\overline{\mathbf{v}}_i$ and $\overline{\mathbf{u}}_i$ are not observed directly. The noisy observations of $\overline{\mathbf{v}}_i$ and $\overline{\mathbf{u}}_i$ can be modeled with

$$\mathbf{v}_i = \overline{\mathbf{v}}_i + \varepsilon_{\mathbf{v}_i} , \qquad \mathbf{u}_i = \overline{\mathbf{u}}_i + \varepsilon_{\mathbf{u}_i} . \qquad\qquad (4)$$

Where $\varepsilon_{\mathbf{v}_i}$ and $\varepsilon_{\mathbf{u}_i}$ are drawn from a symmetric and independent distribution with zero mean and data dependent covariance $S(0, \eta\Sigma_{\mathbf{v}_i})$ and $S(0, \eta\Sigma_{\mathbf{u}_i})$ respectively. It is thus assumed that the noise can be described using a Gaussian distribution. Note that the covariance only need to be known up to a common scale factor $\eta$. Clearly the noise governing the observed data is modeled as heteroscedastic i.e. anisotropic and inhomogeneous. The benefit of using a so-called HEIV estimator is that it can find an optimal solution for both the rotation as well as the translation for data perturbed by heteroscedastic noise. Analog to eq. 1 the observed landmarks can be combined into the matrix $\mathbf{M}$. From the matrices $\mathbf{M}_i$ and $\overline{\mathbf{M}}_i$ the vectors $\mathbf{w}_i = \left[\mathbf{m}_i^1, \mathbf{m}_i^2, \mathbf{m}_i^3\right]^T$ and $\overline{\mathbf{w}}_i = \left[\overline{\mathbf{m}}_i^1, \overline{\mathbf{m}}_i^2, \overline{\mathbf{m}}_i^3\right]^T$ can be constructed, where the superscript is used to index the rows of the matrices. The noise effecting $\mathbf{w}_i$ will be denoted as $\mathbf{C}_i$, it can be computed from $\Sigma_{\mathbf{z}_i}$ and $\Sigma_{\mathbf{u}_i}$. The HEIV based motion estimator then minimizes the following objective function

$$[\mathbf{q}, \mathbf{t}] = arg \min_{\{\mathbf{q}, \boldsymbol{a}, \overline{\mathbf{w}}\}} \sum_{i=1}^{m} (\mathbf{w}_i - \overline{\mathbf{w}}_i)^T \mathbf{C}_i (\mathbf{w}_i - \overline{\mathbf{w}}_i) . \qquad\qquad (5)$$

under the constraint eq. 2. A solution to this non-linear problem can be obtained by iteratively solving a generalized Eigen problem. In the following, $\{\mathbf{R}, \mathbf{t}\} = HEIV(\mathbf{v}, \Sigma_{\mathbf{v}}, \mathbf{u}, \Sigma_{\mathbf{u}})$ denotes the motion estimated on the landmarks $\mathbf{v}_i$ and $\mathbf{u}_i$ with the covariances $\Sigma_{\mathbf{v}_i}$ and $\Sigma_{\mathbf{u}_i}$ for $i = 1..n$.

Optimization approaches such as Generalized Total Least Squares (GTLS), Sampson method and the *renormalization* approach of Kanatani can be derived from HEIV when simplifications are assumed. Furthermore, accuracy is at least equal to other advanced optimization techniques such as the Fundamental Numerical Scheme and Levenberg-Marquardt. Whereas HEIV has better convergence and is less influenced by the initial parameters. The benefit of using HEIV has been noted for many computer vision problems such as motion estimation, camera calibration, tri-focal tensor estimation and structure from motion.

In the derivation of the algorithm, however, an implicit assumption, apart from symmetry, is made on the error models governing the observations. First, it is noted that the observations are modeled with an additive noise term $\varepsilon_{\mathbf{z}_i}$, drawn from $S(0, \eta\Sigma_{\mathbf{z}_i})$, on the true data i.e. $\mathbf{z}_i = \overline{\mathbf{z}}_i + \varepsilon_{\mathbf{z}_i}$ Here $\mathbf{z}_i$ is either $\mathbf{v}_i$ or $\mathbf{u}_i$. Since a real physical noise process is modeled, the dependency of $\Sigma$ on $\mathbf{z}_i$ makes $\Sigma_{\mathbf{z}_i}$ a deterministic function of $z_i$ i.e. $\Sigma_{\mathbf{z}_i} = G(\mathbf{z}_i)$. Thus eq. 4 becomes $\mathbf{z}_i = \overline{\mathbf{z}}_i + S(0, \eta G(\mathbf{z}_i))$. This reveals an inconsistency in the modeling. For a real physical noise process it is impossible to model the observed data $\mathbf{z}_i$ with an additive noise term $\varepsilon_{\mathbf{z}_i}$ that physically depends on the data that is being generated. When the error is modeled as additive on the true data the general heteroscedastic model is

$$\mathbf{v}_i = \overline{\mathbf{v}}_i + \varepsilon_{\mathbf{v}_i} , \qquad \mathbf{u}_i = \overline{\mathbf{u}}_i + \varepsilon_{\mathbf{u}_i} \qquad\qquad (6)$$

and eq. 5 becomes

$$\left[\mathbf{q},\mathbf{t}\right] = arg \min_{\{\mathbf{q},\alpha,\overline{\mathbf{w}}\}} \sum_{i=1}^{m} (\mathbf{w}_i - \overline{\mathbf{w}}_i)^{\mathrm{T}} \overline{\mathbf{C}}_i (\mathbf{w}_i - \overline{\mathbf{w}}_i). \qquad (7)$$

Where $\varepsilon_{\mathbf{v}_i}$ and $\varepsilon_{\mathbf{u}_i}$ are drawn from symetric and indepent distributions with zero mean and coverances depended on the true data, i.e. $S(0,\eta\Sigma_{\overline{\mathbf{v}}_i})$ and $S(0,\eta\overline{\Sigma_{\mathbf{u}_i}})$.

Only when statistically speaking, $\overline{\Sigma}_{\overline{\mathbf{z}}_i}$ can be replaced with $\Sigma_{\mathbf{z}_i}$, eq. 7 becomes eq. 5. As will be shown, assuming $\overline{\Sigma}_{\overline{\mathbf{z}}_i} = \Sigma_{\mathbf{z}_i}$ is a slightly invalid assumption for stereo-reconstruction uncertainty and causes a small bias in the estimate of the motion parameters. Since the absolute pose is the integration of possible thousands of relative motion estimates, this small bias will eventually cause a significant drift. The reason why the assumption is often made is that $\overline{\mathbf{z}}_i$ is unobservable, therefore $\overline{\Sigma}_{\overline{\mathbf{z}}_i}$ is also unknown, while $\Sigma_{\mathbf{z}_i}$ is straightforward to estimate.

To obtain static landmarks needed for motion estimation a stereo based approach is used. This requires image feature correspondences between successive stereo-frames and between images in the stereo-frames themselves. To this purpose the Scale Invariant Feature Transform (SIFT), is used. A threshold is applied on the distance between SIFT descriptors to ensure reliable matches between image features. Furthermore, the epipolar constraint, back-and-forth and left-to-right consistency are enforced. It is assumed that stereo images are rectified according to the epipolar geometry of the used stereo-rig. From an image point in the left image $z_l = [x_l, y_l]'$ and its corresponding point in the right image $z_r = [x_r, y_r]'$ their disparity can be obtained with sub-pixel accuracy $d = x_l - x_r$. Using the disparity $d$, the focal length $f$ of the left camera and the stereo base line $b$, the 3D position of the landmark $\overline{\mathbf{z}}$ imaged by $z_l$ and $z_r$ relative to the optical center of the left camera can be estimated with

$$\mathbf{z} = \left[ \frac{x_l b}{d}, \quad \frac{y_l b}{d}, \quad \frac{fb}{d} \right]^{\mathrm{T}}. \qquad (8)$$

It is noted that more advanced stereo reconstruction methods can be applied for determining the position of the landmark. According to an aspect of the invention, the method thus comprises the steps of providing a subsequent series of image sets that have substantially simultaneously been captured by the multiple camera system, identifying a multiple number of corresponding image features in a particular image set, determining 3D positions associated with said image features based on a disparity in the images in the particular set, and determining 3D positions associated with said image features in a subsequent image set. According to an aspect of the invention, the image features are inliers.

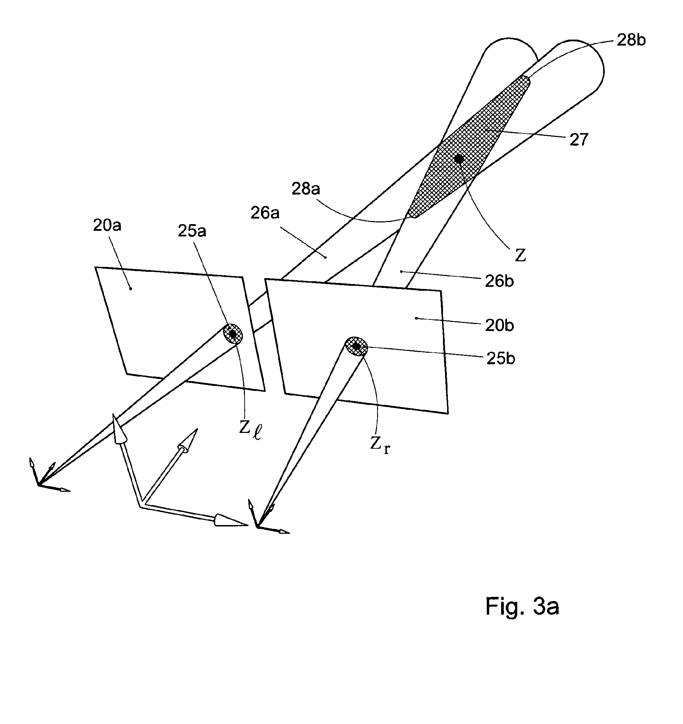

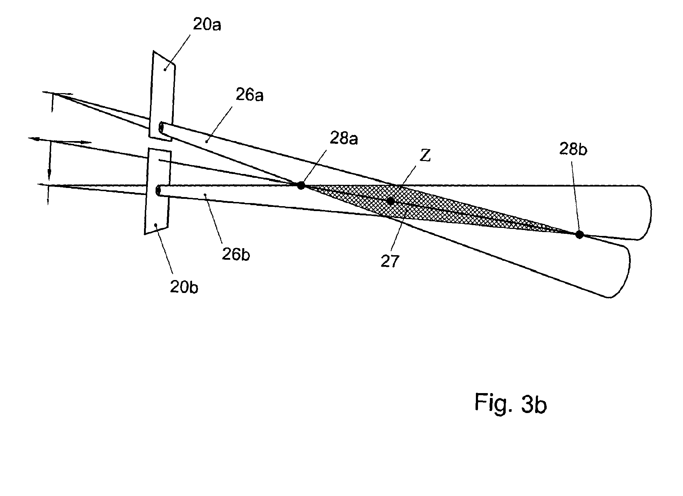

The true landmark $\mathbf{z}$ is projected onto the images of a stereo camera resulting in the noise free image points $\overline{z}_l$ and $\overline{z}_r$. Due to noise in the sensing process only $z_l$, and $z_r$ are observed, where $z_l = \overline{z}_l + \varepsilon_l$ and $z_r = \overline{z}_r + \varepsilon_r$. Assuming that $\varepsilon_l$ and $\varepsilon_r$ are drawn from independent identically distributed Gaussian white-noise with coveriance $\Sigma$, the regions around $\overline{z}_l$ and $\overline{z}_r$ that have a probability of $\alpha$ to contain $z_l$ and $z_r$ can be described using circles 25a, b. The reconstruction based on $z_l$ and $z_r$ i.e. $\mathbf{z}$ has then a probability of $\alpha^2$ to lay within the intersection 27 of the two cones 26a, b spanned by the circles 25a, b and the camera optical centers $z_l$ and $z_r$. Figure 3a shows a perspective side view of an imaged inlier $\mathbf{z}$ having projections $z_l$ and $z_r$ on the images 20a, 20b. End sections 28a, 28b of the intersection 27 represent edges of the uncertainty in the position of the inlier $\mathbf{z}$. Figure 3b shows a perspective top view of the imaged inlier of $\mathbf{z}$ Fig. 3a. It is clearly shown in Fig. 3b that the uncertainty may be asymmetric.

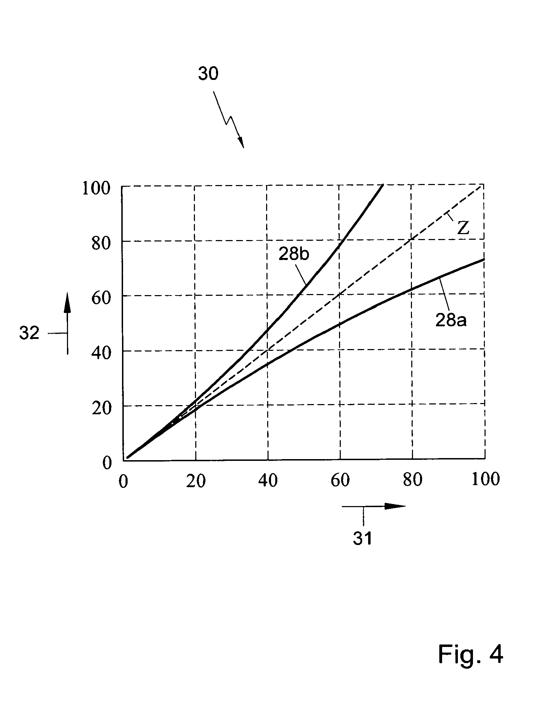

Figure 4 shows a diagram 30 of uncertainty in the determination of the inlier position $\mathbf{z}$, wherein intersection end sections 28a, 28b as well as the true position $\mathbf{z}$ are depicted as a function of the distance 31, 32 in meters. Again, the asymmetric behaviour is clearly shown.

Depending on the position of the true landmark $\overline{\mathbf{z}}$ the intersection volume around $\overline{\mathbf{z}}$ changes. Clearly the general heteroscedastic model of eq. 6 is appropriate.

It is the intersection-volume, approximated with the symmetric distributions $S(0, \eta\Sigma_{\overline{z}})$, that should be used in the optimization. Clearly, enforcing symmetry is unavoidable within the used optimization scheme. Important is the correct relative scale and orientation of $\overline{\Sigma}_{\overline{z}}$. Because, the scale and orientation of the intersection volume depends on $\overline{\mathbf{z}}$, which is unobservable, it is not straightforward to obtain $\overline{\Sigma}_{\overline{z}}$.

It is known estimate the stereo reconstruction uncertainty with a bootstrap approach using residual resampling. The residuals are added to the reprojection $z$ of the estimated landmark position $\mathbf{z}$. As a direct consequence, $\Sigma_{\mathbf{z}}$ is estimated instead of $\overline{\Sigma}_{\mathbf{z}}$. The stereo reconstruction uncertainty can also be estimated using error-propagation of the image feature position uncertainty $\Sigma_{z_l}$ and $\Sigma_{z_r}$ using the Jacobian $\mathbf{J}_{\mathbf{z}}$ of the reconstruction function,

$$\Sigma_{\mathbf{z}} = \mathbf{J}_{z} \begin{bmatrix} \Sigma_{z_i} & 0 & 0 \\ & 0 & 0 \\ 0 & 0 & \Sigma_{z_r} \\ 0 & 0 & \end{bmatrix} \mathbf{J}_{z}^{\mathrm{T}}, \tag{9}$$

$$\mathbf{J}_{z} = \begin{bmatrix} \dfrac{-x_l b}{d^2} + \dfrac{b}{d} & 0 & \dfrac{x_l b}{d^2} & 0 \\ \dfrac{-y_l b}{d^2} & \dfrac{b}{d} & \dfrac{y_l b}{d^2} & 0 \\ \dfrac{-fb}{d^2} & 0 & \dfrac{fb}{d^2} & 0 \end{bmatrix}. \tag{10}$$

Because the jacobian is calculated based on the observed projections $z_l$ and $z_r$, $\Sigma_{\mathbf{z}}$ is estimated instead of $\overline{\Sigma}_{\mathbf{z}}$. According to an aspect of the invention, the distribution parameters thus include covariance parameters.

According to an aspect of the invention, the method thus comprises the step of computing a first and second set of distribution parameters associated with corresponding determined 3D positions. The method also comprises the step of estimating a set of motion parameters representing a motion of the multiple camera system between the time instant associated with the particular image set and the time instant of the subsequent image set, based on 3D position differences of image features in images of the particular set and the subsequent set. Such an estimating step may e.g. be performed using the HEIV approach.

According to an aspect of the invention, the method further comprises the step of improving the computed first or second set of distribution parameters using the computed second or first set of distribution parameters, respectively, and using the estimated set of motion parameters.

To obtain improved estimates of the stereo reconstruction uncertainties they are first approximated using eq. 9 and eq. 10. Then, by using the rotation $\hat{\mathbf{R}}$ and translation $\hat{\mathbf{t}}$ estimated with $\{\hat{\mathbf{R}},\hat{\mathbf{t}}\}=HEIV(\mathbf{v},\Sigma_v,\mathbf{u},\Sigma_u)$, the observed points can be corrected. In this respect it is noted that, according to an aspect of the invention, the step of estimating a set of motion parameters is also based on the computed first and second set of distribution parameters. Further, the motion parameters include 3D motion information and 3D rotation information of the multiple camera system.

Firstly, they are transformed into the same coordinate frame with

$$\begin{aligned} \mathbf{u}_i' &= \hat{\mathbf{R}}\mathbf{u}_i + \hat{\mathbf{t}} \\ \Sigma_{\mathbf{u}_i'} &= \hat{\mathbf{R}}\Sigma_{\mathbf{u}_i}\hat{\mathbf{R}}^{\mathrm{T}} \end{aligned} \tag{11}$$

In this coordinate frame the landmark positions can be fused according to their uncertainties with

$$\begin{aligned} \mathbf{K} &= \Sigma_{\mathbf{v}_i}(\Sigma_{\mathbf{v}_i} + \Sigma_{\mathbf{u}_i'})^{-1} \\ \hat{\mathbf{v}}_i &= \mathbf{v}_i + \mathbf{K}(\mathbf{u}_i' - \mathbf{v}_i) \\ \hat{\mathbf{u}}_i &= \hat{\mathbf{R}}^{\mathrm{T}}(\hat{\mathbf{v}}_i - \hat{\mathbf{t}}) \end{aligned} \tag{12}$$

Finally, a copy of the fused landmark positions is transformed according to the inverse of estimated motion. The process results in an improved estimate of the landmark positions which exactly obey the estimated motion. The real goal is an improved estimate of the landmark uncertainties. To obtain them, the new estimates $\hat{\mathbf{v}}_i$ and $\hat{\mathbf{u}}_i$ can be projected to the imaging planes of a (simulated) stereo-camera. The appropriate stereo camera parameters can be obtained by calibration of the actual stereo camera used. From these projections, $\hat{\mathbf{v}}_i$ and $\hat{\mathbf{u}}_i$, an improved estimate of the covariances, i.e. $\Sigma_{\hat{\mathbf{v}}_i}$ and $\Sigma_{\hat{\mathbf{u}}_i}$, can be obtained with eq. 9 and eq. 10. This technique is preferred because it produces covariances with the correct orientation and scale given $\hat{\mathbf{v}}_i$ and $\hat{\mathbf{u}}_i$.

As such, the step of improving the computed first or second set of distribution parameters comprises the substeps of mapping corresponding positions of image features in images of the particular set and the subsequent set, constructing improved 3D positions of the mapped image features, remapping the constructed improved 3D positions, and determining improved covariance parameters.

In the above-described example, the inlier in a further image is mapped back to an earlier time instant, obviously, however, the inlier might also initially be mapped to a further time instant.

Further, in the described example, a part of a Kalman filter is used to construct an improved 3D position. Here, a weighted means is determined, based on covariances. Also other fusing algorithms can be applied.

A premisses of the proposed bias reduction technique is the absence of landmark outliers. An initial robust estimate of the motion can be obtained using known techniques. Given the robust estimate the improved location and uncertainty of the landmarks can be calculated with eq. 11 and eq. 12. Landmarks can then be discarded based on their Mahalanobis distance to the improved landmark positions

$$(\mathbf{v}_i - \hat{\mathbf{v}}_i)^\mathrm{T} \hat{\mathbf{\Sigma}}_{\hat{\mathbf{v}}_i} (\mathbf{v}_i - \hat{\mathbf{v}}_i) + (\mathbf{u}_i - \hat{\mathbf{u}}_i)^\mathrm{T} \hat{\mathbf{\Sigma}}_{\hat{\mathbf{u}}_i} (\mathbf{u}_i - \hat{\mathbf{u}}_i). \qquad (13)$$

A new motion estimate is then calculated using all the inliers. The process can be iterated several times or until convergence.

From now on $\mathbf{v}_i$ and $\mathbf{u}_i$ and their covariances $\Sigma_{\mathbf{v}_i}$ and $\Sigma_{\mathbf{u}_i}$, obtained with eq. 9 and eq. 10, for $i = 1..n$ are assumed to be inliers only. The bias reduction technique then estimates the motion on these inliers

$$\left\{ \hat{\mathbf{R}}, \hat{\mathbf{t}} \right\} = \mathrm{H}EIV(\mathbf{v}, \mathbf{\Sigma}_\mathbf{v}, \mathbf{u}, \mathbf{\Sigma}_\mathbf{u}) \qquad (14)$$

Given $\hat{\mathbf{R}}$ and $\hat{\mathbf{t}}$ the uncertainties are improved using eq. 11 and eq. 12, resulting in $\hat{\Sigma}_{\hat{\mathbf{v}}_i}$ and $\hat{\Sigma}_{\hat{\mathbf{u}}_i}$. Another motion estimate, using the new covariances, is then generated

$$\left\{ \hat{\hat{\mathbf{R}}}, \hat{\hat{\mathbf{t}}} \right\} = \mathrm{H}EIV(\mathbf{v}, \hat{\mathbf{\Sigma}}_{\hat{\mathbf{v}}}, \mathbf{u}, \hat{\mathbf{\Sigma}}_{\hat{\mathbf{u}}}) \qquad (15)$$

According to an aspect of the invention, the method thus comprises thus the step of improving the estimated set of motion parameters using the improved computation of the set of distribution parameters. The motion bias is then approximated using

$$\mathbf{t}_{bias} = \begin{bmatrix} \omega_x & 0 & 0 \\ 0 & \omega_y & 0 \\ 0 & 0 & \omega_z \end{bmatrix} \hat{\hat{\mathbf{t}}} - \hat{\mathbf{t}}$$

$$\mathbf{R}_{bias} = \mathrm{D}CM\left( \begin{bmatrix} \omega_p & 0 & 0 \\ 0 & \omega_h & 0 \\ 0 & 0 & \omega_r \end{bmatrix} \mathrm{A}\left( \hat{\mathbf{R}}^\mathrm{T} \hat{\hat{\mathbf{R}}} \right) \right)$$

$$(16)$$

Here $\omega_x$, $\omega_y$ and $\omega_z$ are the appropriate gains that scale the estimated tendency of the translation bias to the correct magnitude. By using the gains $\omega_p$, $\omega_r$ and $\omega_r$ the same is applied to the euler angles (pitch,heading,roll), obtained with A , of the rotation bias tendency. The function $\mathrm{D}CM$ transforms the scaled Euler angles back into a rotation matrix. According to an aspect of the invention, the method includes the step of calculating a bias direction based on the initially estimated set of motion parameters and on the improved estimated set of motion parameters, so that a corrected for the bias can be realized.

Finally, an unbiased motion estimate is obtained with

$$\begin{aligned}
\mathbf{R}_{unbiased} &= \hat{\mathbf{R}}\mathbf{R}_{bias} \\
\mathbf{t}_{unbiased} &= \hat{\mathbf{t}} + \mathbf{t}_{bias}
\end{aligned} \qquad (17)$$

The need for the bias gains ($\omega_x$, $\omega_y$, $\omega_z$, $\omega_p$, $\omega_h$, $\omega_r$) is a direct consequence of the fact that $\hat{\Sigma}_{\hat{\mathbf{v}}_i}$ and $\hat{\Sigma}_{\hat{\mathbf{u}}_i}$ are only on average improved estimates of the true landmark uncertainties $\Sigma_{\overline{\mathbf{v}}_i}$ and $\Sigma_{\overline{\mathbf{u}}_i}$. In reality, this improvement might even be very small. Nevertheless, the improvement reveals the bias tendency. The gains then amplify the estimated tendency to the correct magnitude. According to an aspect of the invention, the method comprises a step of estimating an absolute bias correction, including multiplying the calculated bias direction by bias gain factors. In the equations the bias gains are denoted as constants. According to an aspect of the invention, the gains can be the results of functions that depend on the input data.

A numerical simulation will be described to give insight into the advantages of the method according to the invention. The invention includes the insight that eq. 4 and eq. 5 are essentially wrong and should be replaced with eq. 6 and eq. 7. Furthermore, interesting observations regarding the dependency of the bias on the landmark distribution are given. Using the available groundtruth $\overline{\mathbf{R}}$ and $\overline{\mathbf{t}}$, the bias in the estimators is calculated as follows:

$$\mathbf{Bias}_t = \left( \frac{1}{m} \sum_{i=1}^{m} \hat{\mathbf{t}}_i \right) - \overline{\mathbf{t}},$$

$$\mathbf{Bias}_R = \frac{1}{m} \sum_{i=1}^{m} A\left( \overline{\mathbf{R}}^{\top} \hat{\mathbf{R}}_i \right),$$

For a first experiment only the bias due to approximating $\overline{\Sigma_{\mathbf{z}}}$ with $\Sigma_{\mathbf{z}}$ is of interest. The possible bias introduced by using a symmetric distribution for what in reality is an asymmetric distribution is neglected. The purpose is to show that the general heteroscedastic model of eq. 6 and 7 is to be preferred and will cause an unbiased HEIV estimate.

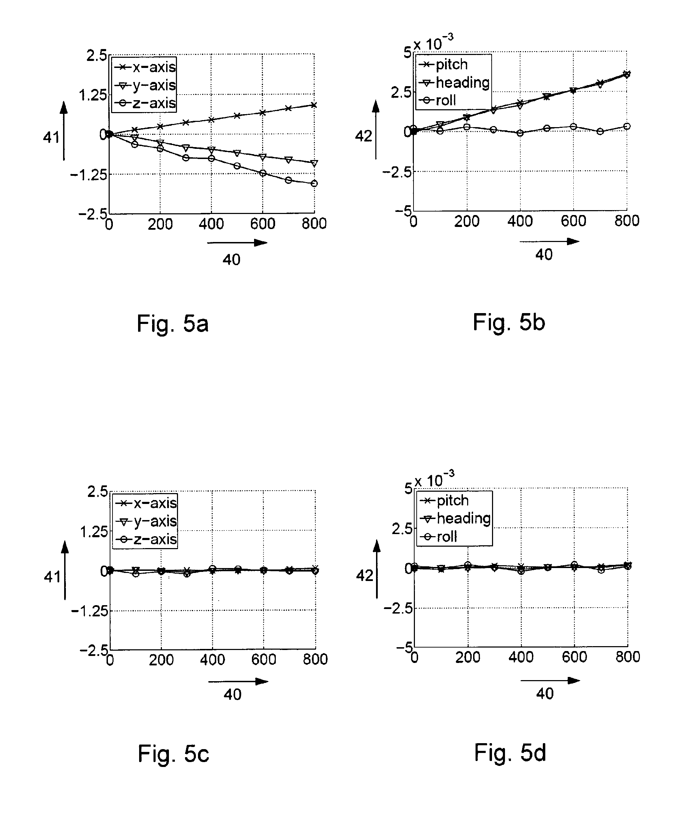

In order to generate noise that is symmetric and at the same time mimics stereo-reconstruction noise the following approach has been chosen. The artificial points $\overline{\mathbf{u}}_i.....\overline{\mathbf{u}}_{150}$ were generated homogenously within the space defined by the optical center of the left camera and the first image quadrant, as shown in Fig. 2a. The distances of the generated landmarks ranged from 5 m to 150 m. The points $\overline{\mathbf{v}}_i.....\overline{\mathbf{v}}_{150}$ were then generated by transforming $\overline{\mathbf{u}}_i.....\overline{\mathbf{u}}_{150}$ with the groundtruth motion $\overline{\mathbf{R}}$ and $\overline{\mathbf{t}}$. These 3D points were projected onto the imaging planes of a simulated stereo-camera and $\Sigma_{\overline{\mathbf{v}}_i}$ and $\Sigma_{\overline{\mathbf{u}}_i}$ were calculated using eq. 9 and 10. For each point a random perturbation, drawn from either $\eta(0, \overline{\Sigma_{\overline{\mathbf{v}}_i}})$ or $\eta(0, \overline{\Sigma_{\overline{\mathbf{u}}_i}})$ was added to the true 3D landmark locations resulting in $\mathbf{v}_i$ and $\mathbf{u}_i$. The noisy landmark locations were then also projected onto the imaging planes of the stereo-camera and from these $\Sigma_{\mathbf{v}_i}$ and $\Sigma_{\mathbf{u}_i}$ were estimated using eq. 9 and 10. Then two motion estimates were obtained, one using H$EIV$($\mathbf{v}$, $\overline{\Sigma_{\mathbf{v}}}$, $\mathbf{u}$, $\overline{\Sigma_{\mathbf{u}}}$) and another one using H$EIV$($\mathbf{v}$, $\Sigma_{\mathbf{v}}$, $\mathbf{u}$, $\Sigma_{\mathbf{u}}$). The experiment was repeated one thousand times for each of nine different motions. The result are depicted in Fig. 5a-d showing a bias in motion parameters in the first quadrant 21. The motions have a constant heading of 1 degree and an increasing translation over the z- axis. Fig. 5a and c relate to translations 41 [mm] as a function of a translation over the z-axis 40 [mm] while Fig. 5b and d relate to rotations 42 [degrees] as a function of a translation over the z-axis. Further, Fig. 5a and b relate to an approach wherein $\overline{\Sigma_{\mathbf{z}}}$ is modeled with $\Sigma_{\mathbf{z}}$, while Fig. 5c and d relate to an approach wherein $\overline{\Sigma_{\mathbf{z}}}$ is used for the computation. It can clearly be seen that using the general heteroscedastic model of eq. 6 and 7 results in an unbiased motion estimate. In contrast to this, modeling $\overline{\Sigma_{\mathbf{z}}}$ with $\Sigma_{\mathbf{z}}$ introduces bias. As can be seen in Fig. 5a and b, this bias is relatively small. When many of these biased relative-pose estimates are integrated to track the absolute-pose, however, they will cause significant drift.

In a further numerical experiment, the stereo-reconstruction noise will be modeled more accurately. Furthermore, the effectiveness of the proposed bias reduction technique on simulated data will be presented.

The artificial landmarks $\overline{\mathbf{u}}_i.....\overline{\mathbf{u}}_{150}$ and $\overline{\mathbf{v}}_i.....\overline{\mathbf{v}}_{150}$ were generated similarly to the approach described above. For this experiment also different image quadrants were used i.e. quadrant 2 and quadrant 3, see Fig. 2a. By doing so, the dependency of the bias on the landmark distribution can be visualized. A real-world example of a situation in which the landmarks are not homogenously distributed is shown in Fig. 2b. Again the landmarks were projected onto the imaging planes of a simulated stereo-camera. Now, however, isotropic i.i.d. gaussian noise (with standard deviation of 0.25 pixel) is added to the image projections. By using stereo-reconstruction, on basis of these noisy image points, the landmark positions are estimated resulting in $\mathbf{u}_i.....\mathbf{u}_{150}$ and $\mathbf{v}_i.....\mathbf{v}_{150}$. Also $\Sigma_{\mathbf{v}_i}$ and $\Sigma_{\mathbf{u}_i}$ were estimated, using eq. 9 and 10 from the noisy image points. Again a motion estimate is generated with H$EIV$($\mathbf{v}$, $\Sigma_{\mathbf{v}}$, $\mathbf{u}$, $\Sigma_{\mathbf{u}}$) and the experiment is repeated one thousand times for nine different motions. The results for different landmark distributions is shown in Fig.

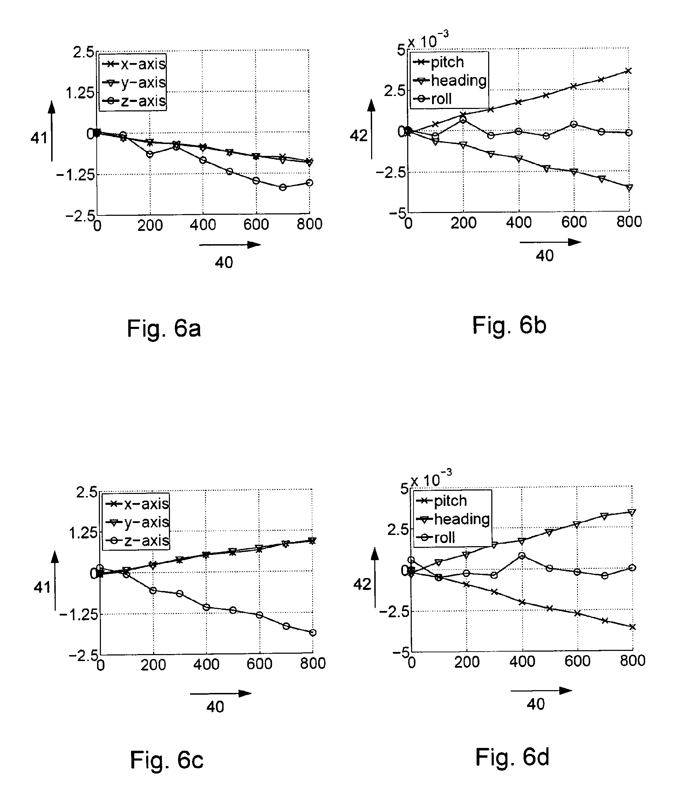

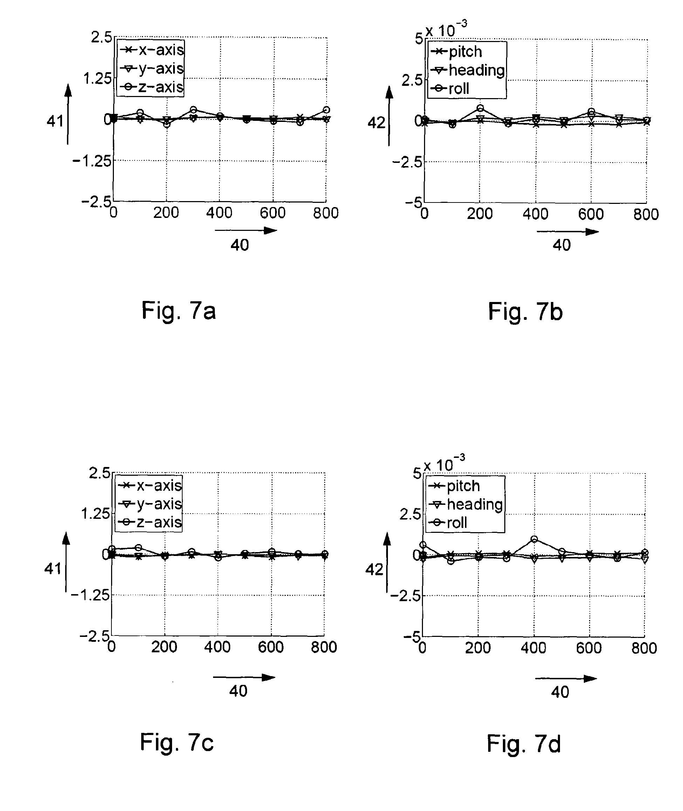

6a-d. In Fig. 6, a bias in motion parameters. The motions have a constant heading of 1 degree and an increasing translation over the z- axis. Fig. 6a and c relate to translations 41 [mm] as a function of a translation over the z-axis 40 [mm] in the second and third quadrant, respectively, while Fig. 6b and d relate to rotations 42 [degrees] as a function of a translation over the z-axis in the second and third quadrant, respectively. The result of applying the bias reduction technique according to the method of the invention is shown in Fig. 7a-d. The used bias gains ($\omega_x$, $\omega_y$, $\omega_z$, $\omega_p$, $\omega_h$, $\omega_r$) were all set to 0.8. The benefit of the proposed bias reduction technique is clearly visible. It is noted that the mean absolute error in motion parameters did not change by using the bias reduction technique. The error in translation was approximately x=1.0 mm, y=1.2 mm and z=3.0 mm and the error in rotation angles for pitch=$3\cdot10^{-3°}$, heading= $2\cdot10^{-3°}$ and roll= $7\cdot10^{-3°}$ for all experiments. Furthermore, the graphs from Fig. 6 visualize the effect of true motion and the landmark distribution on the bias. Interestingly, from Fig. 6 and the image quadrant and axis conventions from Fig. 2a, it can be seen that the bias causes a rotation slightly towards the landmarks and a translation slightly away from the landmarks.

In order to show the applicability of the proposed bias reduction technique it has been tested on a challenging 5 km urban data-set that may currently be (one of) the largest urban data-sets used for relative-pose based visual-odometry research. Many possible sources for outlier landmarks, such as moving cars, trucks and pedestrian, are included in the data-set.

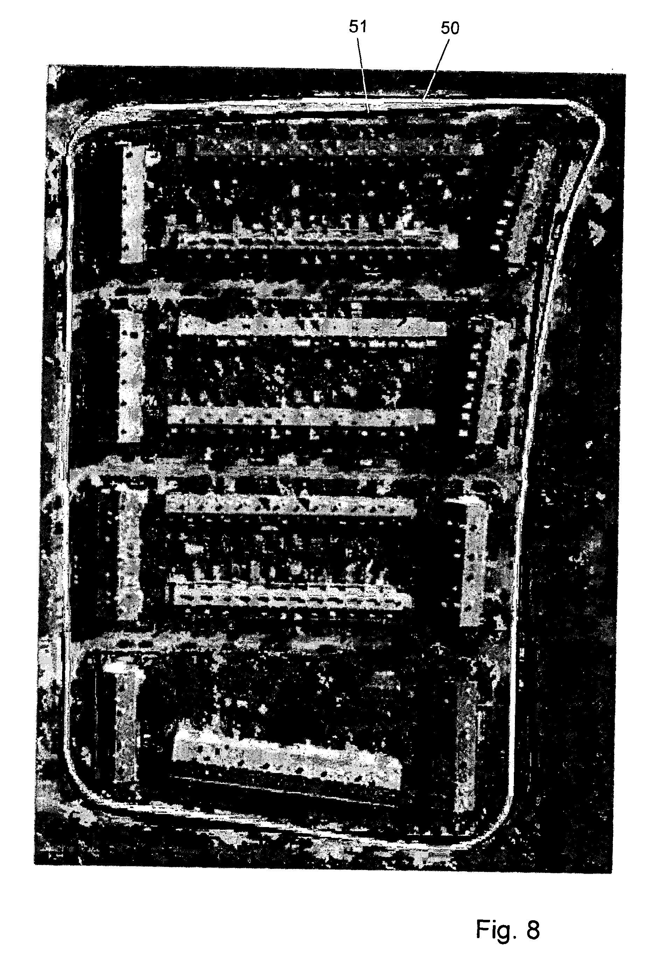

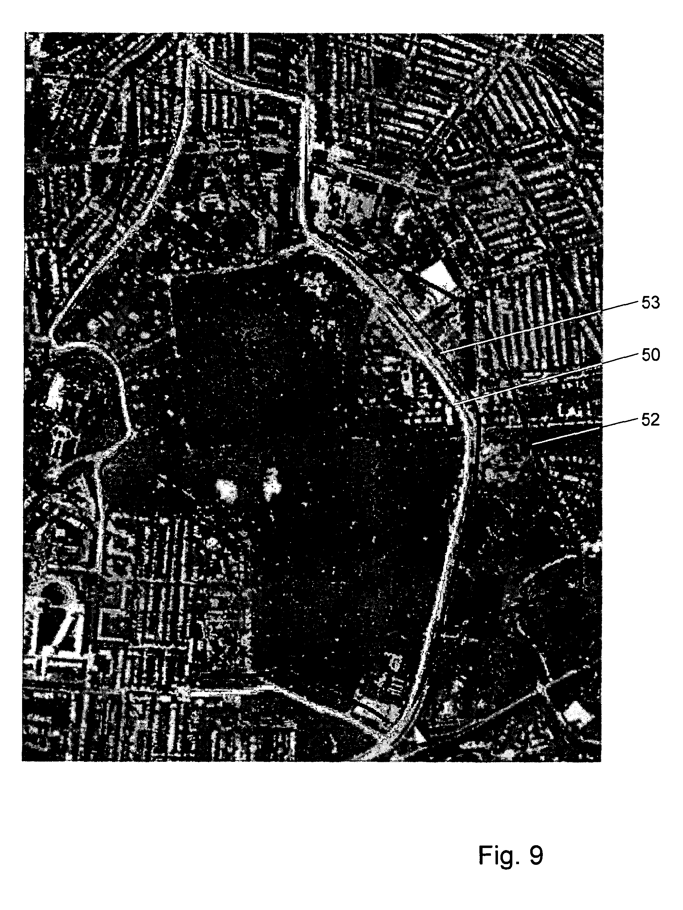

The data-set was recorded using a stereo-camera with a baseline of 40 cm and an image resolution of 640 by 480 pixels running at 30 Hz. The correct values for the real-world bias gains ($\omega_x$, $\omega_y$, $\omega_z$, $\omega_p$, $\omega_h$, $\omega_r$) were obtained by manual selection, such that the loop in a calibration data-set, see Fig. 8, was approximately closed in 3D. In Fig. 8, a first trajectory in a first map is a DGPS based groundtruth 50, while a second trajectory 51 is computed using the method according to the invention. These exact bias reduction gains were then used for the 5 km trajectory. A minimal estimated distance of 30 cm is enforced on-line between frames. If two successive frames do not reach this distance, the latest of these frames is dropped. The process results in approximately 14500 relative-pose estimates for the 19000 images in the data-set. The driven trajectory is obtained by integrating all the relative pose estimates, the results are visualized in Fig. 9 showing a second map with trajectories. Here, a first trajectory 50 shows a DGPS based groundtruth, a second trajectory 52 shows a motion estimation without bias correction while a third trajectory 53 shows a motion estimation with bias correction according to a method according to the invention.

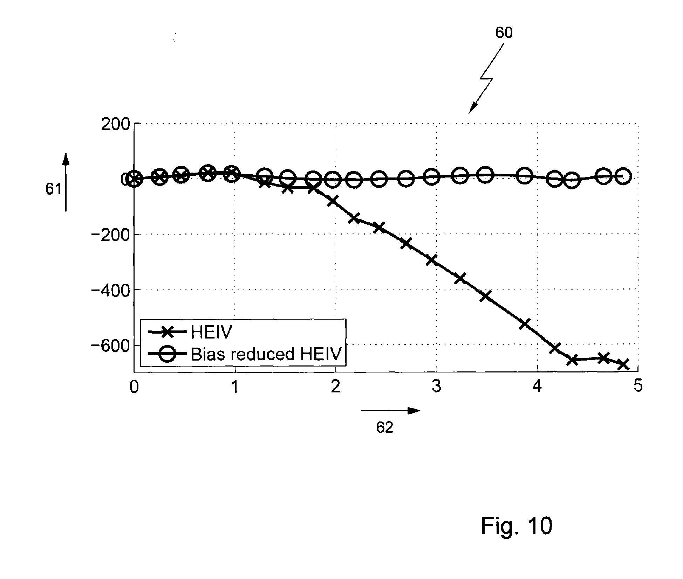

A significant improvement is in the estimated height profile, see Fig. 10 showing an estimated height profile 60, viz. a height 61 [m] as a function of a travelled distance 62 [km], both for uncorrected and corrected bias. Due to bias in the estimated roll angle the trajectory without bias reduction spirals downward. By compensation the bias in roll, using the proposed technique, this spiraling effect is significantly reduced. Due to these biased rotation estimates the error in the final pose as percentage of the traveled distance, when not using the bias reduction technique, was approximately 20%. This reduced to 1% when the proposed bias reduction technique was used. The relative computation time of the most intensive processing stages were approximately, 45% for image-feature extraction and matching and 45% for obtaining the robust motion estimate. The relative computation time of the bias reduction technique was only 4%.

The method according to the invention significantly reduces the structural error in stereo-vision based motion estimation. The benefit of this approach is most apparent when the relative-pose estimates are integrated to track the absolute-pose of the camera, as is the case with visual-odometry. The proposed method has been tested on simulated data as well as a challenging real-world urban trajectory of 5 km. The results show a clear reduction in drift, whereas the needed computation time is only 4% of the total computation time needed.

As the person skilled in the art understands, the accuracy of stereo based motion estimation has not yet reached its limits and improvements can still be made. Clearly, other techniques such as, (sliding-window) bundle-adjustment, loop-closing and/or exploiting auxiliary sensors, can also reach satisfactory localization over large distances. Nevertheless, all these approaches can benefit from more accurate visual-odometry as a starting point for further optimization. For example, a SLAM system that uses the presented visual-odometry approach pushes forward the point at which it requires loop-closing to stay properly localized.

The method of estimating a motion of a multiple camera system in a 3D space can be performed using dedicated hardware structures, such as FPGA and/or ASIC components. Otherwise, the method can also at least partially be performed using a computer program product comprising instructions for causing a processor of the computer system to perform the above described steps of the method according to the invention.

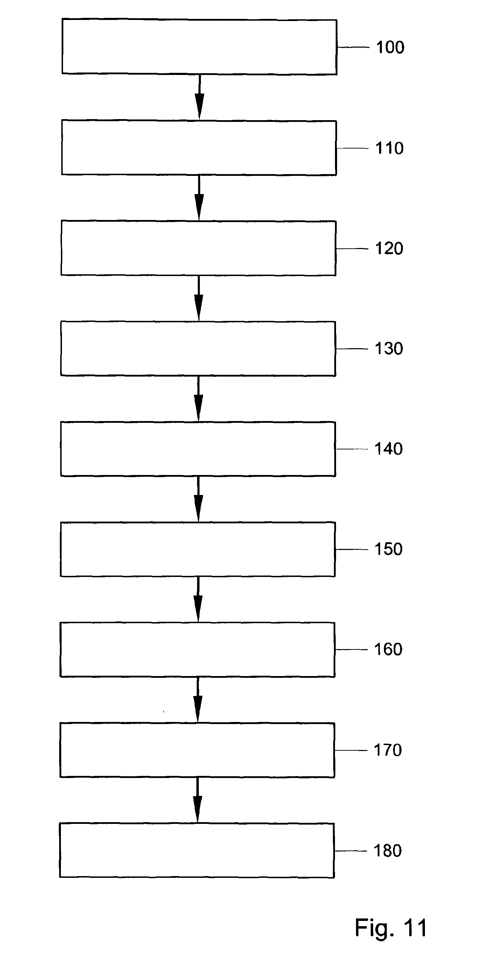

Figure 11 shows a flow chart of an embodiment of the method according to the invention. A method is used for correcting a bias in a motion estimation of a multiple camera system in a three-dimensional (3D) space, wherein the fields of view of multiple cameras at least partially coincide. The method comprises the steps of providing (100) a subsequent series of image sets that have substantially simultaneously been captured by the multiple camera system, identifying (110) a multiple number of corresponding image features in a particular image set, determining (120) 3D positions associated with said image features based on a disparity in the images in the particular set, determining (130) 3D positions associated with said image features in a subsequent image set, computing (140) a first and second set of distribution parameters associated with corresponding determined 3D positions, estimating (150) a set of motion parameters representing a motion of the multiple camera system between the time instant associated with the particular image set and the time instant of the subsequent image set, based on 3D position differences of image features in images of the particular set and the subsequent set, improving (160) the computed first or second set of distribution parameters using the computed second or first set of distribution parameters, respectively, and using the estimated set of motion parameters, improving (170) the estimated set of motion parameters using the improved computation of the set of distribution parameters, and calculating (180) a bias direction based on the initially estimated set of motion parameters and on the improved estimated set of motion parameters.

It will be understood that the above described embodiments of the invention are exemplary only and that other embodiments are possible without departing from the scope of the present invention. It will be understood that many variants are possible.

Instead of using a two camera system, the system according to the invention can also be provided with more than two cameras, e.g. three, four or more cameras having a field of view that at least partially coincides.

The cameras described above are arranged for capturing visible light images. Obviously, also cameras that are sensible to other electromagnetic ranges can be applied, e.g. infrared cameras.

Further, instead of mounting the multiple camera system according the invention on a wheeled vehicle, the system can also be mounted on another vehicle type, e.g. a flying platform such as a plane. Alternatively, the multiple camera system according to the invention can implemented as a handheld device.

Instead of using experimentally determined bias gain values, also other techniques can be used, e.g. noise based techniques, such as an off-line automated calibration procedure using simulated annealing. Furthermore, the effect of neglecting the asymmetry of the stereo-reconstruction uncertainty on the motion estimates may be used as a starting point for finding a bias direction.

Such variants will be obvious for the person skilled in the art and are considered to lie within the scope of the invention as formulated in the following claims.

**Claims**

1.   A method of correcting a bias in a motion estimation of a multiple camera system in a three-dimensional (3D) space, wherein the fields of view of multiple cameras at least partially coincide, the method comprising the steps of:

   - providing a subsequent series of image sets that have substantially simultaneously been captured by the multiple camera system;
   - identifying a multiple number of corresponding image features in a particular image set;
   - determining 3D positions associated with said image features based on a disparity in the images in the particular set;
   - determining 3D positions associated with said image features in a subsequent image set;
   - computing a first and second set of distribution parameters associated with corresponding determined 3D positions;
   - estimating a set of motion parameters representing a motion of the multiple camera system between the time instant associated with the particular image set and the time instant of the subsequent image set, based on 3D position differences of image features in images of the particular set and the subsequent set;
   - improving the computed first or second set of distribution parameters using the computed second or first set of distribution parameters, respectively, and using the estimated set of motion parameters;
   - improving the estimated set of motion parameters using the improved computation of the set of distribution parameters; and
   - calculating a bias direction based on the initially estimated set of motion parameters and on the improved estimated set of motion parameters.

2.   A method according to claim 1, wherein the step of estimating a set of motion parameters is also based on the computed first and second set of distribution parameters.

3.   A method according to claim 1 or 2, wherein the distribution parameters include covariance parameters.

4.   A method according to any previous claim, wherein the step of improving the computed first or second set of distribution parameters comprises the substeps of:

   - mapping corresponding positions of image features in images of the particular set and the subsequent set;
   - constructing improved 3D positions of the mapped image features;

- remapping the constructed improved 3D positions; and
- determining improved covariance parameters.

5. A method according to any previous claim, further comprising the step of estimating an absolute bias correction, including multiplying the calculated bias direction by bias gain factors.

6. A method according to any previous claim, wherein the motion parameters include 3D motion information and 3D rotation information of the multiple camera system.

7. A method according to any previous claim, wherein the image features are inliers.

8. A multiple camera system for movement in a three-dimensional (3D) space, comprising a multiple number of cameras having a fields of view that at least partially coincide, the cameras being arranged for subsequently substantially simultaneously capturing image sets, the multiple camera system further comprising a computer system provided with a processor that is arranged for performing the steps of:

   - providing a subsequent series of image sets that have substantially simultaneously been captured by the multiple camera system;
   - identifying a multiple number of corresponding image features in a particular image set;
   - determining 3D positions associated with said image features based on a disparity in the images in the particular set;
   - determining 3D positions associated with said image features in a subsequent image set;
   - computing a first and second set of distribution parameters associated with corresponding determined 3D positions;
   - estimating a set of motion parameters representing a motion of the multiple camera system between the time instant associated with the particular image set and the time instant of the subsequent image set, based on 3D position differences of image features in images of the particular set and the subsequent set;
   - improving the computed first or second set of distribution parameters using the computed second or first set of distribution parameters, respectively, and using the estimated set of motion parameters;
   - improving the estimated set of motion parameters using the improved computation of the set of distribution parameters; and
   - calculating a bias direction based on the initially estimated set of motion parameters and on the improved estimated set of motion parameters.

9. A computer program product for estimating a motion of a multiple camera system in a three-dimensional (3D) space, wherein the fields of view of multiple cameras at least partially coincide, the computer program product comprising computer readable code for causing a processor to perform the steps of:

   - providing a subsequent series of image sets that have substantially simultaneously been captured by the multiple camera system;
   - identifying a multiple number of corresponding image features in a particular image set;
   - determining 3D positions associated with said image features based on a disparity in the images in the particular set;
   - determining 3D positions associated with said image features in a subsequent image set;
   - computing a first and second set of distribution parameters associated with corresponding determined 3D positions;
   - estimating a set of motion parameters representing a motion of the multiple camera system between the time instant associated with the particular image set and the time instant of the subsequent image set, based on 3D position differences of image features in images of the particular set and the subsequent set;
   - improving the computed first or second set of distribution parameters using the computed second or first set of distribution parameters, respectively, and using the estimated set of motion parameters;
   - improving the estimated set of motion parameters using the improved computation of the set of distribution parameters; and
   - calculating a bias direction based on the initially estimated set of motion parameters and on the improved estimated set of motion parameters.

Fig. 1

Fig. 2a

Fig. 2b

Fig. 3a

Fig. 3b

Fig. 4

Fig. 5a

Fig. 5b

Fig. 5c

Fig. 5d

Fig. 6a

Fig. 6b

Fig. 6c

Fig. 6d

Fig. 7a

Fig. 7b

Fig. 7c

Fig. 7d

Fig. 8

Fig. 9

Fig. 10

Fig. 11

Europäisches
Patentamt

European
Patent Office

Office européen
des brevets

## EUROPEAN SEARCH REPORT

Application Number

EP 08 17 2567

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MATEI B ET AL: "Optimal rigid motion estimation and performance evaluation with bootstrap" PROCEEDINGS OF THE 1999 IEEE COMPUTER SOCIETY CONFERENCE ON COMPUTER VISION AND PATTERN RECOGNITION, JUNE 23-25, 1999; FORT COLLINS, COLORADO, IEEE, THE INSTITUTE OF ELECTRICAL AND ELECTRONICS ENGINEERS, INC, US, vol. 1, 23 June 1999 (1999-06-23), pages 339-347, XP010347685 ISBN: 978-0-7695-0149-9 * the whole document * | 1,2,6-9 | INV. G06T7/20 |
| X | MATTHIES L ET AL: "Error modeling in stereo navigation" IEEE JOURNAL ON ROBOTICS AND AUTOMATION, IEEE, USA, vol. 3, no. 3, 1 June 1987 (1987-06-01), pages 239-248, XP011217401 ISSN: 0882-4967 * the whole document * | 1-4,6-9 | |
| A | MATEI B C ET AL: "Estimation of Nonlinear Errors-in-Variables Models for computer Vision Applications" IEEE TRANSACTIONS ON PATTERN ANALYSIS AND MACHINE INTELLIGENCE, IEEE SERVICE CENTER, LOS ALAMITOS, CA, US, vol. 28, no. 10, 1 October 2006 (2006-10-01), pages 1537-1552, XP001523452 ISSN: 0162-8828 sections 1, 3.5, 5.2 | 1-9 | TECHNICAL FIELDS SEARCHED (IPC) G06K G06T |

-/--

The present search report has been drawn up for all claims

| Place of search | Date of completion of the search | Examiner |
|---|---|---|
| The Hague | 3 September 2009 | Deltorn, Jean-Marc |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 08 17 2567

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SUBBARAO R ET AL: "A Balanced Approach to 3D Tracking from Image Streams" MIXED AND AUGMENTED REALITY, 2005. PROCEEDINGS. FOURTH IEEE AND ACM IN TERNATIONAL SYMPOSIUM ON VIENNA, AUSTRIA 05-08 OCT. 2005, PISCATAWAY, NJ, USA,IEEE, 5 October 2005 (2005-10-05), pages 70-78, XP010856762 ISBN: 978-0-7695-2459-7 sections 2 and 4 ----- | 1-3,8,9 | |
| A | WANG H ET AL: "Correction of bias for motion estimation algorithms" PATTERN RECOGNITION LETTERS, ELSEVIER, AMSTERDAM, NL, vol. 23, no. 13, 1 November 2002 (2002-11-01), pages 1505-1514, XP004360416 ISSN: 0167-8655 * the whole document * ----- | 1,8,9 | |

TECHNICAL FIELDS
SEARCHED     (IPC)

The present search report has been drawn up for all claims

| Place of search | Date of completion of the search | Examiner |
|---|---|---|
| The Hague | 3 September 2009 | Deltorn, Jean-Marc |

EPO FORM 1503 03.82 (P04C01)